Europäisches Patentamt

European Patent Office

Office européen des brevets

(19)

(11) **EP 1 200 158 B1**

(12) **EUROPÄISCHE PATENTSCHRIFT**

(45) Veröffentlichungstag und Bekanntmachung des Hinweises auf die Patenterteilung:
**09.04.2003 Patentblatt 2003/15**

(51) Int Cl.⁷: **A62D 3/00**

(86) Internationale Anmeldenummer:
**PCT/EP00/07486**

(21) Anmeldenummer: **00958362.6**

(22) Anmeldetag: **02.08.2000**

(87) Internationale Veröffentlichungsnummer:
**WO 01/008753 (08.02.2001 Gazette 2001/06)**

(54) **GEMISCH ZUR BEHANDLUNG VON ABFALLMATERIAL**

MIXTURE FOR THE TREATMENT OF WASTE MATERIALS

MELANGE SERVANT AU TRAITEMENT DE DECHETS

(84) Benannte Vertragsstaaten:
**AT BE CH CY DE DK ES FI FR GB GR IE IT LI LU MC NL PT SE**
Benannte Erstreckungsstaaten:
**SI**

(30) Priorität: **02.08.1999 DE 19936324**

(43) Veröffentlichungstag der Anmeldung:
**02.05.2002 Patentblatt 2002/18**

(73) Patentinhaber: **Geodur Cis AG**
**6302 Zug (CH)**

(72) Erfinder: **SCHWETLICK, Wolfgang**
**CH-6318 Walchwil (CH)**

(74) Vertreter: **Grünecker, Kinkeldey,**
**Stockmair & Schwanhäusser Anwaltssozietät**
**Maximilianstrasse 58**
**80538 München (DE)**

(56) Entgegenhaltungen:
**WO-A-93/23087            GB-A- 2 154 996**

- **DATABASE WPI Section Ch, Week 199333 Derwent Publications Ltd., London, GB; Class E12, AN 1993-259287 XP002154939 & CN 1 066 672 A (XIONG M), 2. Dezember 1992 (1992-12-02)**
- **DATABASE WPI Section Ch, Week 198801 Derwent Publications Ltd., London, GB; Class A21, AN 1988-005256 XP002154940 & SU 1 310 411 A (FILATOV V K), 15. Mai 1987 (1987-05-15)**

**Beschreibung**

Die Erfindung betrifft ein Gemisch und ein Verfahren zur Behandlung von Abfallmaterial sowie dessen Verwendung bei der Behandlung von Abfallmaterial.

Herkömmlicherweise werden Abfallmaterialien entweder unbehandelt oder nach Verbrennung in einer Müllverbrennungsanlage auf eine Deponie gebracht. Dabei ist es wichtig, daß die Abfallmaterialien die gültigen Grenzwerte für Schadstoffe im Eluat, das mit Wasser ausgewaschen wird, einhalten. Schadstoffe können Schwermetalle, wie Cd, Cr, Hg, Cu, Ni oder Pb, und/oder organische Kontaminanten sein. Die Abfallmaterialien werden dazu mit Zement und/oder anderen puzzolanisch reagierenden Materialien behandelt.

Bei einem anderen solchen Verfahren wird Abfallmaterial, wie Flugasche, neutral gewaschen, wobei wasserlösliche Salze in dem Waschwasser gelöst und dadurch ausgewaschen werden. Anschließend erfolgt eine Entwässerung der Suspension und das entwässerte Material wird mit Bindemittel, wie Zement, versetzt. Das pastöse Gemisch wird zum Aushärten in Blöcke gegossen oder direkt auf eine Deponie gebracht. Alternativ können Flugasche und Filterkuchen aus der Müllverbrennung direkt mit Tonzuschlägen und Bindemitteln versetzt werden.

Ein Nachteil dieser Verfahren ist ein relativ hoher Verbrauch an Zement, eine damit verbundene große Volumenerhöhung und hohe Kosten. Außerdem sind die herkömmlichen Verfahren in bezug auf ihre Sicherheit gegenüber dem Austreten von umweltgefährdenden Stoffen aus dem behandelten Abfallmaterial nicht ausreichend.

Abfallmaterialen werden außerdem vermehrt der Wiederverwertung zugeführt. Zahlreiche Abfallmaterialien, wie Kalkschlämme oder Schlämme aus der Wasseraufbereitung, enthalten wertvolle Inhaltsstoffe, wie CaO, $Al_2O_3$ und Silikate. Somit können sie beispielsweise in der Klinkerherstellung verwendet werden. Klinker ist ein Zwischenprodukt für die Herstellung von Zement und wird in der Regel aus natürlichem Rohmehl, das im wesentlichen aus CaO, $Al_2O_3$, $SiO_2$ und $Fe_2O_3$ besteht, hergestellt. Ein Teil des natürlichen Rohmehls kann somit in Abhängigkeit von dessen Zusammensetzung durch Abfallmaterialien ersetzt werden.

Auch im Falle der Wiederverwertung ist es notwendig, daß die wiederverwerteten Abfallmaterialien bestimmte Grenzwerte für den Austritt an Schadstoffen, wie Schwermetallen, nicht überschreiten.

Somit lag der Erfindung die Aufgabe zugrunde, ein Gemisch und ein Verfahren zur Behandlung von Abfallmaterialien zur Verfügung zu stellen, das die vorstehend genannten Probleme überwindet.

Diese Aufgabe wird durch ein Gemisch, geeignet zur Behandlung von Abfallmaterialien, umfassend (A) mindestens ein Zinksalz einer gesättigten oder ungesättigten aliphatischen oder aromatischen Carbonsäure, (B) mindestens eine Calciumsalz einer gesättigten oder ungesättigen aliphatischen oder aromatischen Carbonsäure, (C) mindestens ein Hydrophobierungsmittel, (D) mindestens einen Aminoalkohol, und (E) $NH_3$, gelöst.

Komponente (A) ist mindestens ein Zinksalz einer gesättigten oder ungesättigten aliphatischen oder aromatischen Carbonsäure. Vorzugsweise ist Komponente (A) mindestens ein Zinksalz einer gesättigten oder ungesättigten Fettsäure, insbesondere einer gesättigten oder ungesättigten Fettsäure mit 1 bis 30 Kohlenstoffatomen, wie Palmitoleinsäure, Ölsäure, Erucasäure, Patmitinsäure, Margarinsäure, Stearinsäure, Arachinsäure oder Behensäure oder Gemische davon. Insbesondere bevorzugt ist Komponente (A) das Zinksalz der Stearinsäure.

Komponente (A) kann gegebenenfalls mindestens zwei Zinksalze umfassen. Vorzugsweise hat mindestens eines der Zinksalze einen Aktivgehalt von mindestens 15%, insbesondere 17%. Der Aktivgehalt an Zinksalz gibt die stöchiometrische Menge des Zinksalzes in der wäßrigen Lösung an.

Komponente (B) ist mindestens eine Calciumsalz einer gesättigten oder ungesättigten aliphatischen oder aromatischen Carbonsäure. Vorzugsweise ist Komponente (B) mindestens ein Calciumsalz einer gesättigten oder ungesättigte Fettsäure. Die Definition der Fettsäure ist wie vorstehend für Komponente (A) beschrieben.

Komponente (C) ist mindestens ein Hydrophobierungsmittel. Hydrophobierungsmittel für Putze und Beton sind bekannt. Diese können beispielsweise zur Hydrophobierung von Baustoffen, die Kalk und/oder Zement enthalten, eingesetzt werden. Hydrophobierungsmittel können mit den basischen Bestandteilen von Bindemitteln gemäß der nachstehenden Gleichung reagieren:

$$2\ R\text{-}COO\text{-}A + Ca(OH)_2 \rightarrow (R\text{-}COO)_2Ca + 2\ A\text{-}OH$$

wobei der Rest R-COO- der Rest einer gesättigten oder ungesättigten aliphatischen oder aromatischen Carbonsäure und der Rest A ein Aminrest ist. Der Rest einer gesättigten oder ungesättigten aliphatischen oder aromatischen Carbonsäure ist vorzugsweise ein Fettsäurerest. Die Definition der Fettsäure ist wie vorstehend für Komponente (A) beschrieben. Ein Beispiel eines kommerziell erhältlichen Hydrophobierungmittels ist ein unter dem Handelsnamen "LIGA MS" von der Firma Peter Greven Fett-Chemie GmbH & Co. KG vertriebenes reaktives Hydrophobierungsmittel. Ein weiteres Beispiel für Hydrophobierungsmittel sind Invertseifen, wie Alkylammoniumsalze, wobei der Alkylrest gesättigt oder ungesättigt sein kann und vorzugsweise 1 bis 30 Kohlenstoffatome hat. Gegebenenfalls kann Komponente (C) in einem Alkohol/Wasser-Gemisch zugegeben werden.

Komponente (D) ist mindestens ein Aminoalkohol. Vorzugsweise wird Komponente (D) ausgewählt aus der Gruppe, bestehend aus Mono-, Di-, Triethanolamin, Dimethylaminoethanol, Diethylaminoethanol, N-Methyldiethanolamin, Mono-, Di- und Triisopropanolamin, insbesondere Triethanolamin.

Außerdem umfaßt das Gemisch als Komponente (E) $NH_3$.

Vorzugsweise enthält das Gemisch 50 - 90 Gew.-%, insbesondere 70 - 80 Gew.-% Komponente (A). Wenn Komponente (A) zwei Zinksalze umfaßt, dann können 60 - 70 Gew.-%, insbesondere 65 - 68 Gew.-% eines ersten Zinksalzes und 5 - 15 Gew.-%, insbesondere 8 - 10 Gew.-% eines zweiten Zinksalzes mit einem Aktivgehalt von mindestens 15 %, insbesondere mindestens 17 % anwesend sein. Außerdem enthält das Gemisch vorzugsweise 0,1 - 10 Gew.-%, insbesondere 2 - 5 Gew.-% Komponente (B), 5 - 20 Gew.-%, insbesondere 12 - 15 Gew.-% Komponente (C), 0,1 - 10 Gew.-%, insbesondere 2 - 5 Gew.-% Komponente (D) und 0,01 - 5 Gew.-%, insbesondere 0,1 - 0,7 Gew.-% Komponente (E).

Das Gemisch kann mit einem Lösungsmittel verdünnt sein. Das Lösungsmittel kann ausgewählt sein aus der Gruppe, bestehend aus Wasser, einem Alkohol und Gemischen davon. Der Alkohol kann ausgewählt werden aus Ethanol, Isopropanol, Butylalkohol. Bevorzugt ist das Lösungsmittel ein Gemisch aus Wasser und Alkohol, das vorzugsweise aus 85 Gew.-% Wasser und 15 Gew.-% Alkohol besteht. Vorzugsweise werden 80 bis 99 Gew.-% Lösungsmittel, bezogen auf das Gewicht der Gesamtmischung, insbesondere 90 bis 98 Gew.-% Lösungsmittel zugegeben.

Außerdem kann das Gemisch zusätzliche Additive enthalten, die vorzugsweise ausgewählt werden aus der Gruppe, bestehend aus Mitteln zum Ausfällen von Schwermetallen, wie Natriumsulfid, Reduktionsmitteln, wie $FeSO_4$, Komplexierungsmitteln, wie Mercaptanverbindungen, Bindemitteln, wie Portlandzement oder puzzolanisch wirkenden Mitteln, wie ausgewählte Verbrennungsaschen. Beispiele für weitere verwendbare Additive sind $FeCl_3$, $NaHSO_3$, Harnstoff und Wasserglas. Die Menge und Art an Additiven kann nach der Art und der Konzentration der Schadstoffe in den Abfallmaterialien gewählt werden.

Das erfindungsgemäße Gemisch kann insbesondere bei der Behandlung von Abfallmaterialien, wie kontaminierten Böden, industriellen Reststoffen aus der Montanindustrie, der metallverarbeitenden und chemischen Industrie, Schlämmen aus der industriellen und kommunalen Abwasserreinigung, Reststoffen aus der Papiererzeugung oder Rückständen aus der Bodenwäsche, Müllverbrennung und Sondermüllverbrennung eingesetzt werden.

Das erfindungsgemäße Gemisch eignet sich zur Behandlung von festen und wäßrigen Abfallmaterialien mit anorganischen und organischen Schadstoffen, wie Schwermetallen, wasserlöslichen Salzen und organischen Verbindungen.

In dem erfindungsgemäßen Verfahren wird in einer Stufe (a) das erfindungsgemäße Gemisch zu den Abfallmaterialien zugegeben. Vorzugsweise werden 0,01 bis 5, bevorzugter 0,05 bis 0,15 und insbesondere 0,12 Gew.-% Gemisch, bezogen auf das Gewicht des Abfallmaterials, zugegeben. In Abhängigkeit von der Menge der in dem Abfallmaterial vorhandenen Schadstoffe kann das erfindungsgemäße Gemisch unverdünnt oder mit Wasser verdünnt zugegeben werden. Bei einer Menge an Schadstoffen von <5000 mg/Tonne Abfallmaterial ist es bevorzugt, das erfindungsgemäße Gemisch mit Wasser verdünnt zuzugeben, wobei das Verhältnis von erfindungsgemäßem Gemisch zu Wasser vorzugsweise 1:20 bis 1:10 beträgt. Wenn die Menge an Schadstoffen zwischen >5000 mg/Tonne Abfallmaterial und <50000 mg/Tonne Abfallmaterial liegt, ist es bevorzugt, das erfindungsgemäße Gemisch mit Wasser verdünnt zuzugeben, wobei das Verhältnis von erfindungsgemäßem Gemisch zu Wasser vorzugsweise 1:10 bis 1:5 beträgt. Wenn die Menge an Schadstoffen >50000 mg/Tonne Abfallmaterial beträgt, ist es bevorzugt, das erfindungsgemäße Gemisch mit Wasser verdünnt zuzugeben, wobei das Verhältnis von erfindungsgemäßem Gemisch zu Wasser vorzugsweise 1:5 bis 1:2,5 beträgt.

Bei erfindungsgemäßen Verfahren kann gegebenenfalls vor Stufe (a) die Zusammensetzung der Abfallmaterialien bestimmt werden. Vorzugsweise werden 95 bis 100%, insbesondere 95 bis 98% der Inhaltsstoffe der Abfallmaterialien bestimmt. Die einzelnen Abfallmaterialien werden im Hinblick auf die für die nachfolgende Verwendung kritischen Konzentrationen an Schwermetallen, CaO, $Al_2O_3$, $Fe_2O_3$, $P_2O_5$, $SiO_2$, Spurenelemente, wie Mangan, Fluor oder Phosphor, und Anionen, wie Chlorid, Cyanid oder Sulfat, untersucht. Wenn die Zusammensetzung bereits bekannt ist, ist eine solche Bestimmung nicht notwendig.

Die Konzentration gegebenenfalls zusätzlicher Additive, wie Reduktionsmittel oder Komplexbildner, kann in Abhängigkeit von der Schadstoffbelastung der Abfallmaterialien berechnet und angepaßt werden.

Durch die Zugabe des erfindungsgemäßen Gemisches werden Schadstoffe, wie Schwermetalle, in den Abfallmaterialien immobilisiert. Die Schadstoffe werden durch chemische oder physikalische Verfahren so modifiziert, daß sie aus den Abfallmaterialien nicht mehr austreten können. Beispielsweise können die Schadstoffe durch Komplexbildung, Salzbildung und Ausfällen oder durch Veränderung des pH-Werts oder der Dichte der Abfallmaterialien immobilisiert werden.

Nach Zugabe des erfindungsgemäßen Gemisches und gegebenenfalls weiterer Additive werden die Bestandteile in einer Stufe (b) gemischt. Beim Mischen können Standardmischanlagen oder modifizierte Mischanlagen verwendet werden. Wenn die Mischanlagen modifiziert werden, können in an sich bekannter Weise der Energieeintrag, d.h. Mischen bei höherer Geschwindigkeit, die Mischzeit, der Mischablauf und die Kontrolle der Reaktionstemperatur verändert werden. Durch den höheren Energieeintrag wird eine bessere Homogenisierung der Masse erreicht, und der Energieeintrag beträgt vorzugsweise mindestens etwa 60 Ampère, insbesondere etwa 75 Ampère. Die Mischzeit ist vorzugsweise mindestens 3,5 Minuten, insbesondere 4-10 Minuten, und die Reaktionstemperatur beträgt vorzugsweise mindestens etwa 20 °C, insbesondere mindestens etwa 35 °C.

Das erfindungsgemäße Gemisch und gegebenenfalls die zusätzlichen Additive können entweder gleichzeitig oder chargenweise zu den Abfallmaterialien zugegeben werden. Wenn es erwünscht ist, den Reaktionsverlauf zu steuern, werden das Gemisch und gegebenenfalls die zusätzlichen Additive vorzugsweise nacheinander chargenweise zugegeben, damit definierte Zwischenprodukte entstehen. Wenn das erfindungsgemäße Gemisch in mehreren Chargen während des Mischens zugegeben wird, kann außerdem zwischen den einzelnen Zugabestufen die Temperatur und der pH-Wert des entstehenden Gemisches kontrolliert werden. Dadurch kann sichergestellt werden, daß die Umsetzung der Schadstoffe nahezu vollständig ist.

Durch das erfindungsgemäße Verfahren kann der Materialbedarf für die Immobilisierung von Abfallmaterialien minimiert werden. Außerdem ist die Volumenzunahme der Abfallmaterialien geringer als bei einem Verfahren, bei dem das erfindungsgemäße Gemisch nicht verwendet wird. Vorzugsweise ist die Volumenzunahme 1,15 bis 1,35-fach. insgesamt entstehen dadurch niedrigere Gesamtkosten für Material, Behandlung, Transport und Deponie der Abfallmaterialien. Außerdem zeichnen sich die behandelten Abfallmaterialien dadurch aus, daß die vorgeschriebenen Grenzwerte für das Eluat, auch bei Anwendung von Testverfahren zur Prüfung des Langzeitverhaltens, sicher eingehalten werden. Ein weiterer Vorteil des erfindungsgemäßen Verfahrens besteht darin. daß damit Abfallmaterial, wie Flugasche, behandelt werden kann, ohne es vorher zu waschen.

Die behandelten Abfallmaterialien können in einer Stufe (c) mit einem hydraulischen Bindemittel versetzt werden. Das hydraulische Bindemittel kann aus der Gruppe, bestehend aus Zement, Tonerde und Portlandzement, ausgewählt werden. Die mit einem hydraulischen Bindemittel versetzten Abfallmaterialien werden vorzugsweise auf eine Deponie gebracht.

Die mit den erfindungsgemäßen Verfahren behandelten Abfallmaterialien können auch zur Herstellung von Sekundärrohstoffen für den Deponiebau, als Ersatzstoffe für Zementrohmehl oder bei der Herstellung von Pflanzensubstratpellets eingesetzt werden. Beim Deponiebau können die erfindungsgemäß behandelten Abfallmaterialien als Profilierungsmaterialien, gasgängige Stützschichten oder Stützkorn zur Integration in Reststoffdichtungen verwendet werden. Außerdem können die erfindungsgemäß behandelten Abfallmaterialien in Abhängigkeit von ihrer Zusammensetzung als $Al_2O_3$-, $Fe_2O_3$- und/oder $SiO_2$-Ersatzprodukte zur Korrektur von fehlenden Gehalten an $Al_2O_3$, $CaO$, $Fe_2O_3$ und $SiO_2$ im natürlichen Steinbruchaufkommen, zum Ausgleich zu hoher Schadstoffkonzentrationen in Rohmehl, wie Schwefel, oder zum Ausgleich zu hoher Konzentrationen an $CaO$ Verwendung finden. Auch zur Herstellung von Pfanzensubstratpellets mit definierten Stickstoffgehalten können die mit dem erfindungsgemäßen Verfahren behandelten Abfallmaterialien verwendet werden.

Für die Herstellung der Sekundärrohstoffe können insbesondere Waschrückstände aus der Grundstoffindustrie und von Bodenwaschanlagen, industrielle Feststoffe aus der Montanindustrie, der metallverarbeitenden und chemischen industrie und der Papierindustrie, Schlämme aus der industriellen und kommunalen Abwasserreinigung, Kesselrost- und Filteraschen aus der Papierschlamm- und Klärschlammverbrennung sowie aus Holz- und Steinkohlenfeuerungsanlagen verwendet werden. Die mit den erfindungsgemäßen Verfahren behandelten Abfallmaterialien können nach der Behandlung pelletiert oder granuliert werden, wobei die Pelletierung insbesondere für Abfallmaterialien, wie Filterstäube, Schlämme oder Rückstände aus industrieller Produktion, und die Granulierung für behandelte kontaminierte Erde angewendet wird. Dadurch kann das Einsatzspektrum behandelter Abfallmaterialien erheblich erweitert werden.

Nachstehend wird die vorliegende Erfindung anhand von Beispielen erläutert.

Beispiel 1

In einen 1l Erlenmeyerkolben wurden 67 g Zinkstearat, 9,5 g Zinkstearat mit einem Aktivgehalt von 15%, 4,7 g Calciumstearat, 14,3 g Palmitinammoniumchlorid, 4 g Triethanoiamin und 0,5 g $NH_3$ gegeben. Dann wurde das so erhaltene Gemisch bei ca. 20 °C mindestens 30 Minuten gerührt.

Beispiel 2

Zu 59,45 kg Elektrofilterasche MVA aus der Müllverbrennungsanlage in Zürich wurden 0,12 kg des Gemisches aus Beispiel 1 zugegeben und 1 Minute gemischt. Sodann wurden 15,85 kg Portlandzement zugegeben und 4,0 Minuten gemischt. Anschließend wurden 24,58 kg Wasser zugegeben und 1,5 Minuten gemischt. Die Temperatur während des Mischens betrug 36,5 °C. Man erhielt behandeltes Abfallmaterial mit einem pH-Wert von 11,6 nach der Behandlung und einem pH-Wert von 10,9 nach 28 Tagen.

Beispiel 3

50,26 kg gewaschene Elektrofilterasche MVA und 14,52 kg Abwasserreinigungsschlamm aus der Müllverbrennungsanlage in Zürich wurden 2 Minuten gemischt. Anschließend wurden 0,12 kg des Gemisches aus Beispiel 1 zugegeben und 1 Minute gemischt. Sodann wurden 15,96 kg Portlandzement zugegeben und 4 Minuten gemischt. Danach wurden 19,14 kg Wasser zugegeben und 1,5 Minuten gemischt. Die Temperatur während des Mischens betrug 42,1 °C. Man erhielt behandeltes Abfallmaterial mit einem pH-Wert von 11,6 nach der Behandlung und einem pH-Wert von 10,8 nach 28 Tagen.

### Beispiel 4

49,94 kg gewaschene Elektrofilterasche, 14,43 Abwasserreinigungsschlamm und 3,96 kg Papierschlammverbrennungsasche aus der Müllverbrennungsanlage in Zürich wurden 3 Minuten gemischt. Anschließend wurden 0,12 kg des Gemisches aus Beispiel 1 zugegeben und 1 Minute gemischt. Sodann wurden 1,51 kg $FeCl_3$ und 1,51 kg Wasserglas zugegeben und nach jeder Zugabe 2 Minuten gemischt. Danach wurden 9,9 kg Portlandzement zugegeben und 4 Minuten gemischt. Sodann wurden 18,63 kg Wasser zugegeben und 1,5 Minuten gemischt. Die Temperatur während des Mischens betrug 39,5 °C. Man erhielt behandeltes Abfallmaterial mit einem pH-Wert von 11,5 nach der Behandlung und einem pH-Wert von 10,7 nach 28 Tagen.

### Beispiel 5

Zu 63,16 kg Elektrofilterasche aus der Müllverbrennungsanlage in Horgen wurden 0,12 kg einer Zusammensetzung gegeben, die 1 Teil des Gemisches aus Beispiel 1 und 5 Teile Wasser enthielt, und 1 Minute gemischt. Sodann wurden 2,05 kg Harnstoff und 1,50 kg $FeSO_4$ zugegeben und nach jeder Zugabe 2 Minuten gemischt. Anschließend wurden 14,17 kg Portlandzement zugegeben und 4 Minuten gemischt. Danach wurden 19,00 kg Wasser zugegeben und 1,5 Minuten gemischt. Die Temperatur während des Mischens betrug 68,8 °C. Man erhielt behandeltes Abfallmaterial mit einem pH-Wert von 10,6 nach der Behandlung und einem pH-Wert von 10,4 nach 28 Tagen.

### Beispiel 6

33,55 kg gewaschene Elektrofilterasche und 40,00 kg Abwasserreinigungsschlamm wurden 2 Minuten gemischt. Sodann wurden 0,12 kg derselben Zusammensetzung wie in Beispiel 5 zugegeben und 1 Minute gemischt. Anschließend wurden 14,12 kg Portlandzement zugegeben und 4 Minuten gemischt. Danach wurden 12,21 kg Wasser zugegeben und 1,5 Minuten gemischt. Die Temperatur während des Mischens betrug 39 °C. Man erhielt behandeltes Abfallmaterial mit einem pH-Wert von 11,4 nach der Behandlung und einem pH-Wert von 10,7 nach 28 Tagen.

### Beispiel 7

59,06 kg gewaschene Elektrofilterasche und 6,21 kg Papierschlammverbrennungsasche aus der Müllverbrennungsanlage in Horgen wurden 3 Minuten gemischt. Sodann wurden 0,12 kg derselben Zusammensetzung wie in Beispiel 5 zugegeben und 1 Minute gemischt. Anschließend wurden 1,33 kg Wasserglas und 1,57 kg $NaHSO_3$ zugegeben und nach jeder Zugabe 2 Minuten gemischt. Danach wurden 10,35 kg Portlandzement zugegeben und 4 Minuten gemischt. Sodann wurden 21,36 kg Wasser zugegeben und 1,5 Minuten gemischt. Die Temperatur während des Mischens betrug 56 °C. Man erhielt behandeltes Abfallmaterial mit einem pH-Wert von 10,8 nach der Behandlung und einem pH-Wert von 10,2 nach 28 Tagen.

### Beispiel 8

82,60 kg kontaminierter Boden von einem Gasfabrikgelände wurden mit 0,12 kg des Gemisches aus Beispiel 1 2 Minuten gemischt. Sodann wurden 6,60 kg Zement zugegeben und 2 Minuten gemischt. Anschließend wurden 10,68 kg Wasser zugegeben und 1,5 Minuten gemischt. Die Temperatur während des Mischens betrug 25 °C. Man erhielt behandeltes Abfallmaterial mit einem pH-Wert von 11,3 nach der Behandlung und 10,2 nach 28 Tagen.

### Patentansprüche

1. Gemisch, geeignet zur Behandlung von Abfallmaterialien, umfassend

   (A) mindestens ein Zinksalz einer gesättigten oder ungesättigten aliphatischen oder aromatischen Carbonsäure,
   (B) mindestens ein Calciumsalz einer gesättigten oder ungesättigten aliphatischen oder aromatischen Carbonsäure,
   (C) mindestens ein Hydrophobierungsmittel,
   (D) mindestens einen Aminoalkohol und
   (E) $NH_3$.

2. Gemisch nach Anspruch 1, wobei Komponente (A) mindestens ein Zinksalz einer gesättigten oder ungesättigten Fettsäure ist.

3. Gemisch nach Anspruch 2, wobei die Fettsäure ausgewählt ist aus der Gruppe, bestehend aus gesättigten Fettsäuren mit 1 bis 30 Kohlenstoffatomen.

4. Gemisch nach Anspruch 3, wobei die Fettsäure Stearinsäure ist.

5. Gemisch nach einem der vorstehenden Ansprüche, wobei Komponente (B) mindestens ein Calciumsalz einer gesättigten oder ungesättigten Fettsäure ist.

6. Gemisch nach Anspruch 5, wobei die Fettsäure ausgewählt ist aus der Gruppe, bestehend aus gesättigten Fettsäuren mit 1 bis 30 Kohlenstoffatomen.

7. Gemisch nach Anspruch 6, wobei die Fettsäure Stearinsäure ist.

8. Gemisch nach einem der vorstehenden Ansprüche, wobei Komponente (C) eine Invertseife ist.

9. Gemisch nach einem der vorstehenden Ansprüche, wobei Komponente (D) ausgewählt ist aus der Gruppe, bestehend aus Mono-, Di-, Triethanolamin, Dimethylaminoethanol, Diethylaminoethanol, N-Methyldiethanolamin, Mono-, Di- und Triisopropanolamin.

10. Gemisch nach einem der vorstehenden Ansprüche, umfassend
50 - 90 Gew.-% Komponente (A),
0,1 - 10 Gew.-% Komponente (B),
5 - 20 Gew.-% Komponente (C),
0,1 - 10 Gew.-% Komponente (D) und
0,01 - 5 Gew.-% Komponente (E).

11. Gemisch nach einem der vorstehenden Ansprüche, welches zusätzlich Wasser umfaßt.

12. Gemisch nach einem der vorstehenden Ansprüche, welches zusätzlich Mittel zum Ausfällen von Schwermetallen, Reduktionsmittel, Komplexierungsmittel, Bindemittel oder puzzolanisch wirkende Mittel umfaßt.

13. Verfahren zur Behandlung von Abfallmaterialien, umfassend die Stufen

(a) Zugabe eines Gemisches nach einem der Ansprüche 1 bis 12 zu Abfallmaterial und
(b) Mischen der Bestandteile.

14. Verfahren nach Anspruch 13, wobei vor Stufe (a) die Zusammensetzung des Abfallmaterials bestimmt wird.

15. Verfahren nach einem der Ansprüche 13 oder 14, wobei 0,5 bis 1,5 kg Gemisch pro Tonne Abfallmaterial zugegeben werden.

16. Verfahren nach einem der Ansprüche 13 bis 15, welches zusätzlich als Stufe (c) die Zugabe eines hydraulischen Bindemittels umfaßt.

17. Verfahren nach Anspruch 16, wobei das hydraulische Bindemittel ausgewählt ist aus der Gruppe, bestehend aus Zement, Tonerde und Portlandzement.

18. Verfahren nach einem der Ansprüche 16 oder 17, wobei 2 bis 30 Gew.-% hydraulisches Bindemittel, bezogen auf das Gewicht des Abfallmaterials, zugegeben werden.

19. Behandeltes Abfallmaterial, erhältlich durch das Verfahren nach einem der Ansprüche 13 bis 18.

20. Verwendung des Gemisches nach einem der Ansprüche 1 bis 12 zur Behandlung von Abfallmaterial.

**Claims**

1. Mixture suitable for treatment of waste materials comprising:

(A) at least one zinc salt of a saturated or unsaturated aliphatic or aromatic carboxylic acid,
(B) at least one calcium salt of a saturated or unsaturated aliphatic or aromatic carboxylic acid,
(C) at least one hydrophobing agent,
(D) at least one amino alcohol and
(E) $NH_3$.

2. Mixture according to claim 1, wherein component (A) is at least one zinc salt of a saturated or unsaturated fatty acid.

3. Mixture according to claim 2, wherein the fatty acid is selected from the group consisting of saturated fatty acids with 1 to 30 carbon atoms.

4. Mixture according to claim 3, wherein the fatty acid is stearic acid.

5. Mixture according to any one of the preceding claims, wherein component (B) is at least one calcium salt of a saturated or unsaturated fatty acid.

6. Mixture according to claim 5, wherein fatty acid is selected from the group consisting of saturated fatty acids with 1 to 30 carbon atoms.

7. Mixture according to claim 6, wherein the fatty acid is stearic acid.

8. Mixture according to any one of the preceding claims, wherein component (C) is an invert soap.

9. Mixture according to any one of the preceding claims, wherein component (D) is selected from the group consisting of mono-, di-, triethanol amine, dimethyl amino ethanol, diethyl amino ethanol, N-methyl diethanol amine, mono-, di- and triisopropanol amine.

10. Mixture according to any one of the preceding claims comprising
50 - 90% by weight of component (A),
0.1 - 10% by weight of component (B),
5 - 20% by weight of component (C),
0,1 - 10% by weight of component (D) and
0.01 - 5% by weight of component (E).

11. Mixture according to any one of the preceding claims comprising in addition water.

12. Mixture according to any one of the preceding claims comprising in addition agents for precipitation of heavy metals, reducing agents, complexing agents, binding agents and/or agents with pozzolanic properties.

13. Process for the treatment of waste materials comprising the steps

(a) addition of a mixture according to any one of claims 1 to 12 to waste material, and
(b) mixing of the components.

14. Process according to claim 13, wherein before step (a) the composition of the waste material is determined.

15. Process according to claim 13 or 14, wherein 0.5 to 1.5 kg of the mixture per ton of waste material is added.

16. Process according to any one of claims 13 to 15, comprising in addition as step (c) the addition of a hydraulic binding agent.

17. Process according to claim 16, wherein the hydraulic binding agent is selected from the group consisting of cement, clay and Portland cement.

18. Process according to any one of claims 16 or 17, wherein 2 to 30% by weight of hydraulic binders based on the weight of waste materials is added.

19. Treated waste material obtainable by a process according to any one of claims 13 to 18.

20. Use of a mixture according to any one of claims 1 to 12 for the treatment of waste materials.

**Revendications**

1. Mélange à utiliser pour le traitement de déchets, comprenant :

(A) au moins un sel de zinc d'un acide carboxylique aliphatique ou aromatique saturé ou insaturé,
(B) au moins un sel de calcium d'un acide carboxylique aliphatique ou aromatique saturé ou insaturé,
(C) au moins un agent hydrophobe,
(D) au moins un amino-alcool, et
(E) $NH_3$.

2. Mélange selon la revendication 1, dans lequel le composant (A) est au moins un sel de zinc d'un acide gras saturé ou insaturé.

3. Mélange selon la revendication 2, dans lequel l'acide gras est choisi dans le groupe formé par des acides gras saturés ayant 1 à 30 atomes de carbone.

4. Mélange selon la revendication 3, dans lequel l'acide gras est un acide stéarique.

5. Mélange selon une des revendications précédentes, dans lequel le composant (B) est au moins un sel de calcium d'un acide gras saturé ou insaturé.

6. Mélange selon la revendication 5, dans lequel l'acide gras est choisi dans le groupe formé par des acides gras saturés ayant 1 à 30 atomes de carbone.

7. Mélange selon la revendication 6, dans lequel l'acide gras est un acide stéarique.

8. Mélange selon l'une des revendications précédentes, dans lequel le composant (C) est un savon inverti.

9. Mélange selon l'une des revendications précédentes, dans lequel le composant (D) est choisi dans le groupe formé par la mono-, di-, tri- éthanolamine, le diméthylaminoéthanol, le diéthylaminoéthanol, la N-méthyldiéthanolamine, la mono-, di-, tri-isopropanolamine.

10. Mélange selon l'une des revendications précédentes, comprenant
50 - 90 % en poids de composant (A),
0,1 - 10 % en poids de composant (B),
5 - 20 % en poids de composant (C),
0,1 - 10 % en poids de composant (D) et
0,01 - 5 % en poids de composant (E).

11. Mélange selon l'une des revendications précédentes, lequel contient en plus de l'eau.

**12.** Mélange selon une des revendications précédentes, lequel contient en plus un agent de précipitation des métaux lourds, un réducteur, un agent de complexation, un liant ou un agent à activité pouzzolanique.

**13.** Procédé de traitement de déchets, comprenant les étapes :

(a) addition d'un mélange selon l'une des revendications 1 à 12 aux déchets,
(b) mélange des composants.

**14.** Procédé selon la revendication 13, dans lequel la composition des déchets est déterminée avant l'étape (a).

**15.** Procédé selon la revendication 13 ou 14, dans lequel le mélange est ajouté à raison de 0,5 à 1,5 kg par tonne de déchets.

**16.** Procédé selon l'une des revendications 13 à 15, lequel comprend en plus une étape (c), qui consiste à ajouter un liant hydraulique.

**17.** Procédé selon la revendication 16, dans lequel le liant hydraulique est choisi dans le groupe formé par le ciment, l'alumine et le ciment Portland.

**18.** Procédé selon la revendication 16 ou 17, dans lequel le liant hydraulique est ajouté à raison de 2 à 30 % en poids par rapport au poids de déchets.

**19.** Déchets traités, obtenus par le procédé selon l'uns des revendications 13 à 18.

**20.** Utilisation du mélange selon l'une des revendications 1 à 12, pour le traitement de déchets.